# FASCICULE DE BREVET EUROPEEN

(11) **EP 1 035 978 B1**
(45) Date de publication et mention de la délivrance du brevet: **09.01.2002**
(21) Numéro de dépôt: 98959805.7
(22) Date de dépôt: 27.10.1998
(51) Int. Cl.: B60C 9/22

(54) **ARMATURE DE SOMMET DE PNEUMATIQUE**
REIFENGÜRTEL
TYRE REINFORCING BELT PLY

(30) Priorité: 05.11.1997 FR 9714010
(43) Date de publication de la demande: 20.09.2000
(73) Titulaire: Compagnie Générale des Etablissements MICHELIN-MICHELIN & CIE, 63040 Clermont-Ferrand Cedex 09 (FR)
(72) Inventeur: CORDONNIER, François-Jacques, F-63100 Clermont-Ferrand (FR)
(74) Mandataire: Devaux, Edmond-Yves
(86) Numéro de dépôt international: EP9806799
(87) Numéro de publication internationale: WO9924270

(56) Documents cités:
- EP-A- 0 360 539
- WO-A-97/30857
- PATENT ABSTRACTS OF JAPAN vol. 014, no. 276 (M-0984), 14 juin 1990 & JP 02 081708 A (BRIDGESTONE CORP), 22 mars 1990
- PATENT ABSTRACTS OF JAPAN vol. 018, no. 543 (M-1687), 17 octobre 1994 & JP 06 191219 A (BRIDGESTONE CORP), 12 juillet 1994

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une nappe à l'autre en formant avec la direction circonférentielle du pneumatique des angles dont la valeur peut être comprise entre 10° et 60° en valeur absolue.

La demande internationale WO97/30857, en vue d'abaisser la température de fonctionnement d'un pneumatique à armature de carcasse radiale de type "Poids-Lourds", tout en ayant une solution tout aussi efficace qu'économique, préconise d'adjoindre à ladite armature de carcasse une armature de sommet comprenant au moins deux nappes de sommet de travail en câbles inextensibles, croisés d'une nappe à l'autre, en faisant avec la direction circonférentielle des angles compris entre 10° et 45°, caractérisée en ce qu'une nappe additionnelle, continue axialement, formée d'éléments métalliques orientés sensiblement parallèlement à la direction circonférentielle, est placée radialement entre les nappes de travail, ladite nappe additionnelle ayant une largeur axiale pouvant être au moins égale à 1,05 fois la largeur axiale de la nappe de sommet de travail la plus large.

Dans le cadre ci-dessus, la nappe additionnelle peut être formée de câbles en acier continus dits semi-élastiques, c'est-à-dire des câbles présentant des allongements relatifs à la rupture supérieurs à 2%. Ces câbles permettent d'obtenir le niveau de rigidité apte à une répartition harmonieuse de la tension circonférentielle entre les nappes de sommet de travail et la nappe additionnelle. Lesdits câbles sont avantageusement dits "bi-module", c'est-à-dire présentant une courbe, contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2 %, permettent une augmentation du développement circonférentiel de la nappe additionnelle pendant la cuisson du pneumatique.

La nappe additionnelle peut aussi être formée de câbles métalliques en acier orientés circonférentiellement et coupés de manière à former des tronçons de longueur très inférieure à la longueur circonférentielle de la nappe, les coupures entre tronçons étant axialement décalées les unes par rapport aux autres . Un tel mode de réalisation permet de conférer, de manière simple, à la nappe additionnelle la rigidité désirée, quelle qu'elle soit.

Le choix des câbles élastiques ou coupés pour le renforcement de la nappe additionnelle ne permet pas la meilleure résistance à la fatigue de ladite nappe, soit en conséquence d'une diminution de la force de rupture des câbles élastiques, soit en conséquence de l'existence de concentrations de contrainte dans le mélange de calandrage des câbles coupés.

La demande française FR 97/09996 enseigne qu'une meilleure résistance à la fatigue de la nappe additionnelle d'éléments de renforcement métalliques et circonférentiels, combinée à une industrialisation plus facile, peut être obtenue grâce à l'emploi comme éléments de renforcement d'éléments métalliques ondulés dans le plan de la nappe, placée radialement entre les nappes de travail, les ondulations des éléments de renforcement étant parallèles entre elles, en phase et orientées parallèlement à la direction circonférentielle, et le rapport de la rigidité linéique de la nappe additionnelle sur la somme des rigidités linéiques des autres nappes de l'armature de sommet étant au plus égale à 0,10.

La demande japonaise JP 02/081708 décrit une armature de sommet composée de deux nappes d'éléments de renforcement ondulées, le rapport de l'amplitude des ondulations sur la longueur d'onde des mêmes ondulations étant moindre aux bords qu'au centre de l'armature. Ledit rapport permet une rigidité plus élevée aux bords de nappes et évite ainsi une élévation radiale des bords de bande de roulement.

Etant donné les progrès réalisés en durée de vie des bandes de roulement pour pneumatiques "Poids-Lourds", ainsi qu'en endurance des armatures de carcasse, l'endurance des armatures de sommet se doit d'être améliorée du point de vue résistance à la séparation entre armature de carcasse et armature de sommet, résistance à la séparation entre les nappes de sommet de travail, et résistance à la fatigue des câbles orientés circonférentiellement de la nappe additionnelle.

Le pneumatique à armature de carcasse radiale, conforme à l'invention, ayant une armature de sommet comprenant au moins deux nappes de sommet de travail formées d'éléments de renforcement métalliques inextensibles, croisés d'une nappe à la suivante, une nappe additionnelle, continue axialement, formée d'éléments de renforcement métalliques de plus gros diamètre que celui des éléments de renforcement des nappes de l'armature de sommet situées radialement de part et d'autre de ladite nappe additionnelle, et étant placée radialement entre les nappes de travail avec une largeur axiale L₃₂ au moins égale à 50% de la largeur axiale maximale de l'armature de carcasse, est caractérisé en ce que les éléments de renforcement sont en acier, ondulés dans le plan de la nappe, les ondulations des éléments étant parallèles entre elles, en phase, orientées parallèlement à la direction circonférentielle, telles que le rapport de l'amplitude sur la longueur d'onde des ondulations d'éléments ondulés décroisse en allant axialement du centre aux bords de ladite nappe pour être minimum aux dits bords.

Des éléments métalliques ondulés dont la direction moyenne est circonférentielle sont des éléments dont les ondulations ont des axes ayant une direction faisant avec la direction circonférentielle un angle compris dans l'intervalle + 5°, - 5° autour de 0.

De même, le rapport de l'amplitude sur la longueur d'onde des ondulations sera préférentiellement compris entre 2 % et 15 %, l'amplitude d'une ondulation étant par définition mesurée crête à crête. Le rapport de l'amplitude sur la longueur d'onde, compris entre 2 % et 15 %, permet d'avoir des éléments de renforcement ne contrariant pas la conformation de l'ébauche de pneumatique dans le moule de vulcanisation, tout en permettant l'obtention, après cuisson, montage et gonflage du pneumatique, de la rigidité linéique d'armature de sommet nécessaire à l'amélioration de l'endurance de ladite armature de sommet.

La nappe additionnelle peut avoir une largeur axiale au moins égale à 1,05 fois la largeur axiale de la nappe de sommet de travail la plus large.

La nappe additionnelle d'éléments circonférentiels ondulés, dans le cas plus particulier des pneumatiques de rapport de forme H/S au moins égal à 0,50, peut être utilisée en combinaison avec une première nappe de sommet de travail dont la courbure méridienne est sensiblement égale à la courbure méridienne de l'armature de carcasse sous-jacente, de façon à pouvoir la disposer parallèlement à ladite armature de carcasse sans interposition de profilés. La nappe additionnelle est alors prévue avec une courbure sensiblement nulle en étant séparée de la première nappe de travail par des profilés appropriés, de forme sensiblement triangulaire.

L'armature de sommet, conforme à l'invention, sera avantageusement complétée par une nappe de sommet dite de protection, formée de câbles métalliques élastiques rectilignes en acier, orientés par rapport à la direction circonférentielle avec un angle sensiblement égal à l'angle formé par les câbles de la nappe de sommet de travail radialement la plus à l'extérieur, et dont la largeur axiale peut être soit inférieure soit supérieure à la largeur moyenne des nappes de travail.

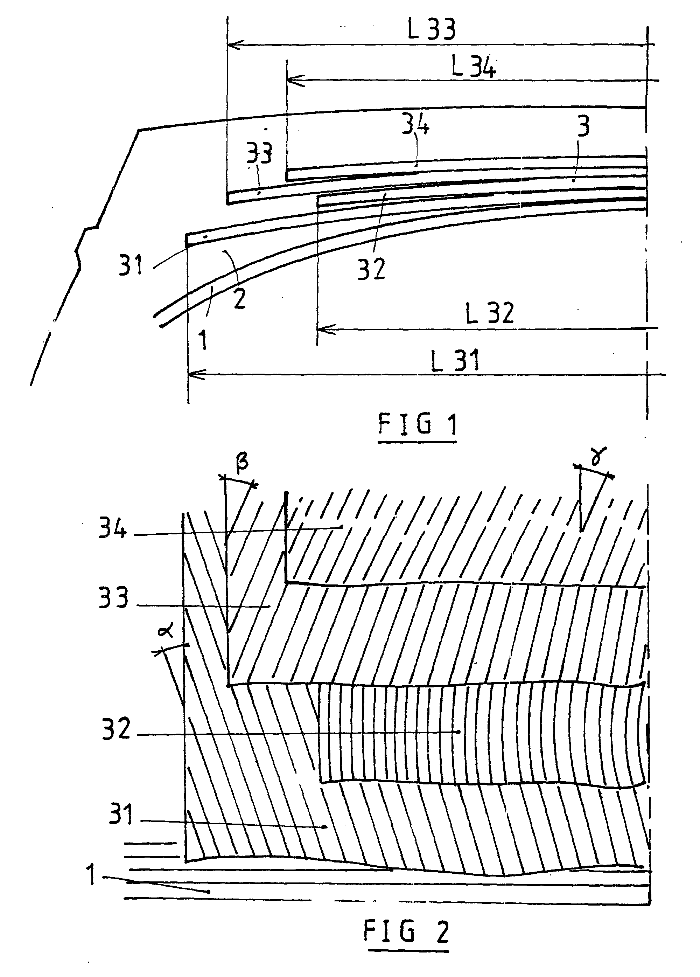

Les caractéristiques et avantages de l'invention seront mieux compris à l'aide de la description qui suit et qui se réfère au dessin, illustrant à titre non limitatif un exemple d'exécution, et sur lequel : la figure 1 représente schématiquement, vue en section méridienne, une armature de sommet conforme à l'invention, et la figure 2 une vue en plan et écorché de ladite armature.

Le pneumatique, de dimension 315 / 80 R 22.5 X, a un rapport de forme égal à 0,8, le rapport de forme étant le rapport de la hauteur du pneumatique sur sa jante de montage sur sa largeur axiale maximale. Ledit pneumatique comprend une armature de carcasse radiale 1 ancrée dans chaque bourrelet à au moins une tringle en formant un retournement, et formée d'une seule nappe de câbles métalliques. Cette armature de carcasse 1 est frettée par une armature de sommet 3, formée radialement de l'intérieur à l'extérieur :
- d'une première nappe de sommet travail 31 formée de câbles métalliques 4+10 x 0,28 non frettés, inextensibles et en acier, lesdits câbles ayant un diamètre de 1,25 mm, parallèles entre eux dans la nappe et disposés avec un pas de 2,0 mm (mesuré perpendiculairement aux dits câbles). Ils sont orientés par rapport à la direction circonférentielle avec un angle α, compris entre 10° et 60° et dans le cas décrit égal à 22°. Ladite première nappe est radialement séparée sur ses bords de l'armature de carcasse 1 sous-jacente par des profilés 2 de mélange caoutchouteux, de forme sensiblement triangulaire ;
- surmontant la première nappe de sommet de travail 31, d'une nappe additionnelle 32 formée de câbles métalliques en acier 3+9+15 x 0,23 non frettés, inextensibles, de diamètre égal à 1,4 mm et séparés les uns des autres d'un pas égal à 2 mm. Lesdits câbles présentent, axialement au centre de la nappe additionnelle, des ondulations d'amplitude crête à crête égale à 12 mm et une longueur d'onde égale à 100 mm, soit approximativement 1/30 de la longueur circonférentielle de la nappe 33. Par contre, aux bords de ladite nappe 32, l'amplitude décroît pour devenir égale à 4 mm, alors que la longueur d'onde desdites ondulations demeure inchangée. La largeur axiale de la nappe additionnelle 32 est subdivisée en 9 bandes axiales d'égale largeur, et dans le cas présenté de 18 mm : une bande centrale et de chaque côté du plan équatorial quatre bandes latérales. La bande centrale est composée de câbles ondulés dont l'amplitude a est égale à 12 mm, alors que les deux bandes latérales les plus proches de la bande centrale sont formées de câbles ondulés dont l'amplitude est égale à 10 mm, et ainsi de suite jusqu'aux deux bandes latérales constituant les bords de la nappe où l'amplitude est devenue 4 mm, après une décroissance de 2 mm de bande à bande. Lesdits éléments sont orientés à 0°, c'est-à-dire que les axes des ondulations qui les représentent sont circonférentiels ;
- puis d'une deuxième nappe de sommet de travail 33 formée de câbles métalliques identiques à ceux de la première nappe 31, disposés avec le même pas et faisant avec la direction circonférentielle un angle β, opposé à l'angle α et, dans le cas montré, égal audit angle α de 22°, (mais pouvant être différent dudit angle α ;
- et enfin d'une dernière nappe 34 de câbles métalliques en acier dits élastiques, orientés par rapport à la direction circonférentielle d'un angle γ de même sens que l'angle β et égal audit angle β, (mais pouvant être différent), cette dernière nappe étant une nappe dite de protection, et des câbles dits élastiques étant des câbles ayant à la rupture un allongement relatif au moins égal à 4%.

La largeur axiale L₃₁ de la première nappe de travail 31 est approximativement égale à 0,71 fois la largeur axiale maximale de la fibre moyenne de l'armature de carcasse 1, soit 226 mm, ce qui est, pour un pneumatique de forme usuelle sensiblement égale à la largeur de la bande de roulement, qui est égale, dans le cas étudié, à 235 mm. La largeur axiale L₃₃ de la deuxième nappe de travail 33 est inférieure à la largeur L₃₁ de la première nappe de travail 31 d'un quantité égale à 0,07 fois la largeur axiale maximale d'armature de carcasse, soit une largeur de 204 mm. La largeur axiale L₃₂ de la nappe additionnelle 32 est sensiblement égale à 162 mm, ce qui représente approximativement 0,51 fois la largeur axiale maximale d'armature de carcasse. La dernière nappe de sommet 34, dite de protection, a une largeur L₃₄ au moins égale et, dans le cas décrit, très légèrement supérieure à la largeur L₃₂ de la nappe additionnelle 32 soit 170 mm.

Une autre variante de pneumatique (non montrée sur le dessin), conforme à l'invention, présente une première nappe de sommet de travail 31 radialement adjacente et parallèle à l'armature de carcasse 1, sa courbure méridienne étant sensiblement égale à la courbure méridienne de l'armature de carcasse 1 sous-jacente, les câbles respectivement de la nappe de carcasse et de la nappe de travail étant séparés par une faible épaisseur constante de mélange caoutchouteux. Les bords axialement extérieurs de la nappe de travail 31 sont alors séparés de la nappe additionnelle 32 de câbles circonférentiels ondulés par des profilés de section transversale triangulaire, l'épaisseur de caoutchouc entre la nappe 31 et la nappe 32, mesurée au niveau de l'extrémité axialement extérieure de la nappe 32 étant sensiblement égale à 2 mm.

## Revendications

1. Pneumatique à armature de carcasse radiale (1), ayant une armature de sommet (3) comprenant au moins deux nappes de sommet de travail (31,33) formées d'éléments de renforcement métalliques inextensibles, croisés d'une nappe à la suivante en faisant avec la direction circonférentielle des angles compris entre 10° et 60°, une nappe additionnelle (32), continue axialement, formée d'éléments de renforcement métalliques de plus gros diamètre que celui des éléments de renforcement des nappes de travail (31, 33) situées radialement de part et d'autre de ladite nappe additionnelle (32), étant placée radialement entre les nappes de travail (31, 33) avec une largeur axiale L₃₂ au moins égale à 50 % de la largeur axiale maximale de l'armature de carcasse (1), **caractérisé en ce que** les éléments de renforcement sont en acier ondulés dans le plan de la nappe, les ondulations de câbles étant parallèles entre elles, en phase, orientées parallèlement à la direction circonférentielle, telles que le rapport de l'amplitude sur la longueur d'onde des éléments ondulés décroisse en allant axialement du centre aux bords de ladite nappe (32), pour être minimum aux dits bords.

2. Pneumatique selon la revendication 1, **caractérisé en ce que** le rapport de l'amplitude sur la longueur d'onde des ondulations des éléments de renforcement de la nappe additionnelle (32), est compris entre 2 % et 15%.

3. Pneumatique selon l'une des revendications 1 à 2, **caractérisé en ce que** le rapport de l'amplitude des ondulations sur la longueur d'onde décroît progressivement en allant axialement du centre de la nappe (32) à ses bords.

4. Pneumatique selon l'une des revendications 1 à 3, **caractérisé en ce que** la première nappe de sommet de travail (31) a une courbure méridienne sensiblement égale à la courbure méridienne de l'armature de carcasse (1) sous-jacente, de façon à ce qu'elle soit disposée parallèlement à ladite armature de carcasse (1), des profilés (4) étant interposés entre les bords de la nappe de travail (31) et la nappe additionnelle (32), dont la courbure est sensiblement nulle.

5. Pneumatique selon l'une des revendications 1 à 4, **caractérisé en ce que** l'armature de sommet (3) comprend en outre une nappe (34), dite de protection, radialement située au dessus de la dernière nappe de travail (34), formée de câbles métalliques en acier, élastiques et rectilignes, orientés par rapport à la direction circonférentielle avec un angle γ de même sens que l'angle β des éléments de la nappe de travail (33) radialement la plus à l'extérieur, et dont la largeur axiale L₃₄ est au moins égale à la largeur axiale L₃₂ de la nappe additionnelle (32).

## Claims

1. Tyre with radial carcass reinforcement (1), having a crown reinforcement (3) which comprises at least two working crown plies (31, 33) formed of inextensible metallic reinforcement elements, which are crossed from one ply to the next forming angles between 10° and 60° relative to the circumferential direction, an additional ply (32), axially continuous and formed of metallic reinforcement elements of greater diameter than that of the reinforcement elements of the working plies (31, 33) located radially on either side of said additional ply (32), being positioned radially between the working plies (31, 33), having an axial width L₃₂ at least equal to 50% of the maximum axial width of the carcass reinforcement (1), **characterized in that** the reinforcement elements are made of steel and undulate in the plane of the ply, the undulations of the cables being parallel to each other, in phase, and orientated parallel to the circumferential direction, such that the ratio of the amplitude to the wavelength of the undulating elements decreases in the axial direction from the centre to the edges of the said ply (32), being a minimum at the said edges.

2. Tyre according to Claim 1, **characterized in that** the ratio of the amplitude to the wavelength of the undulations of the reinforcement elements of the additional ply (32) is between 2% and 15%.

3. Tyre according to any of Claims 1 to 2, **characterized in that** the ratio of the amplitude of the undulations to their wavelength decreases progressively, from the centre of the ply (32) axially towards its edges.

4. Tyre according to any of Claims 1 to 3, **characterized in that** the first working crown ply (31) has a meridian curvature substantially equal to the meridian curvature of the underlying carcass reinforcement (1), so that it is positioned parallel to the said carcass reinforcement (1), sections (4) being interposed between the edges of the working ply (31) and the additional ply (32), the curvature of which being substantially zero.

5. Tyre according to any of Claims 1 to 4, **characterized in that** the crown reinforcement (3) also comprises a ply (34) known as the protection ply, situated radially above the last working ply (33), and formed of elastic and rectilinear metallic cables made of steel orientated relative to the circumferential direction at an angle γ in the same direction as the angle β of the elements of the radially outermost working ply (33), the axial width L₃₄ of the said ply being at least equal to the axial width L₃₂ of the additional ply (32).

## Patentansprüche

1. Luftreifen mit radialer Karkassenbewehrung (1), der eine Scheitelbewehrung (3) aufweist, die mindestens zwei Scheitel-Arbeitslagen (31, 33), die aus undehnbaren Metall-Verstärkungselementen gebildet sind, die von einer Lage zur folgenden unter Bildung von Winkeln zwischen 10° und 60° zur Umfangsrichtung überkreuz laufen, und eine zusätzliche Lage (32) aufweist, die axial durchgehend ist, aus Metall-Verstärkungselementen mit größeren Durchmesser als der der Verstärkungselemente der Arbeitslagen (31, 33) gebildet ist, die radial beiderseits der genannten zusätzlichen Lage (32) gelegen sind, und radial zwischen den Arbeitslagen (31, 33) mit einer axialen Breite L₃₂ angeordnet ist, die mindestens gleich ist 50% der axialen, maximalen Breite der Karkassenbewehrung (1), **dadurch gekennzeichnet, daß** die Verstärkungselemente aus Stahl bestehen, in der Ebene der Lage gewellt sind, und die Wellungen der Elemente zueinander parallel sind, gleichphasig sind, und parallel zur Umfangsrichtung orientiert sind, derart, daß das Verhältnis der Amplitude zur Wellenlänge der Wellungen der gewellten Elemente abnimmt, wenn man axial von der Mitte zu den Rändern der genannten (32) Lage läuft, um an den genannten Rändern ein Minimum zu erreichen.

2. Reifen nach Anspruch 1, **dadurch gekennzeichnet, daß** das Verhältnis der Amplitude zur Wellenlänge der Wellungen der Verstärkungselemente der genannten, zusätzlichen Lage (32) zwischen 2% und 15% liegt.

3. Reifen nach einem der Ansprüche 1 bis 2, **dadurch gekennzeichnet, daß** das Verhältnis der Amplitude der Wellungen zur Wellenlänge fortlaufend abnimmt, wenn man sich axial von der Mitte der Lage (32) zu ihren Rändern hin bewegt.

4. Reifen nach einem der Ansprüche 1 bis 3, **dadurch gekennzeichnet, daß** die erste Scheitel-Arbeitlage (31) eine Meridiankrümmung hat, die im wesenltichen gleich ist der Meridiankrümmung der darunterliegenden Karkassenbewehrung (1), derart, daß sie parallel zur genannten Karkassenbewehrung (1) angeordnet ist, wobei Profile (4) zwischen den Rändern der Arbeitslage (31) und der zusätzlchenb Lage (32) eingeschoben sind, deren Krümmung im wesentlichen Null ist.

5. Reifen nach einem der Ansprüche 1 bis 4, **dadurch gekennzeichnet, daß** die Scheitelbewehrung (3) außerdem eine Lage (34) aufweist, die Schutzlage genannt ist, radial über der letzten Arbeitslage (34) liegt, aus elastischen und geradlinigen Metallseilen aus Stahl gebildet ist, die in Bezug auf die Umfangsrichtung unter einem Winkel γ mit derselben Richtung wie der Winkel β der Elemente der Arbeitslage (33) orientiert sind, die radial am weitesten außenliegt, und deren axiale Breite L₃₄ mindestens gleich ist der axialen Breite L₃₂ der zusätzlichen Lage (32).
